Europäisches Patentamt

European Patent Office

Office européen des brevets

(11) Publication number: **0 193 909**
A2

## (12) EUROPEAN PATENT APPLICATION

(21) Application number: **86102726.6**

(51) Int. Cl.⁴: **G 01 N 27/36**

(22) Date of filing: **03.03.86**

(30) Priority: **05.03.85 US 708229**

(43) Date of publication of application: **10.09.86**
**Bulletin 86/37**

(84) Designated Contracting States: **CH DE GB LI**

(71) Applicant: **Orion Research Incorporated, 840 Memorial Drive, Cambridge, MA 02139 (US)**

(72) Inventor: **Hirschberg, Moshe J., 112 Fuller Street, Brookline MA 02146 (US)**
Inventor: **Gelo, Mark, 64 Bayberry Road, Concord MA 01742 (US)**

(74) Representative: **Endlich, Fritz, Dipl.-Phys., Postfach 1326 Blumenstrasse 8, D-8034 Germering (DE)**

(54) Improved ion-sensitive flat surface electrode.

(57) A method of manufacturing an ion-sensitive electrode comprises the steps of placing a disk (14) of ion-selective membrane glass on a glass tube of substantially lower melting point, and heating said disk to a temperature below its melting point but above the melting point of the tube to transfer sufficient heat through said disk to said tube to melt said tube and thereby enable formation of a seal between said disk and said glass tube. The flat surface ion-sensitive electrode comprises a disk (14) of ion-selective membrane glass sealed to a tube of borosilica glass.

EP 0 193 909 A2

## Field of the Invention

The invention relates to ion-sensitive electrodes and particularly comprises a flat surface electrode formed from a disk of ion-selective membrane material of high melting point fused to the end of a glass tube of substantially lower melting point.

## Background of the Invention

Flat membrane ion-selective electrodes are formed from a tube of material inert to the solution in which the electrode is to be immersed and an ion-selective membrane sealing one end of the tube. An internal electrode is conductively coupled to the membrane, typically through an electrolyte, and provides an electric potential indicative of the activity and thus the concentration of ions in a solution. For sensing sodium ions in a solution, a sodium-selective membrane is used; most commonly, this is a glass such as NAS-1118, a material that provides the desired sodium ion selectivity but that also has a high melting temperature (of the order of $1600°$).

One method of constructing such an electrode involves the use of aluminum silicate glass for the tube. This type of glass has the advantage of matching the membrane-glass both in melting point and in coefficient of expansion. Thus, the tube and membrane can be heated safely to their melting points and joined, so that molten glass forms a seal between the two. Unfortunately, aluminum silicate glass is very expensive and difficult to manipulate with conventional glass blowing techniques. Further, it is not always available from the sole U.S. commercial supplier. Additionally, the sealing process itself presents difficulties because of the very high temperatures required to bring membrane glass, and particularly sodium membrane glass, to its melting point.

In order to form a hermetic bond between the tube and the membrane at high temperatures, a crucible that is inert in contact with the molten glasses and that has a melting point in excess of 1600°C is commonly used. Platinum is most often used for such a crucible because it does not react with molten glasses; unfortunately, because the crucible must be used as a heat source as well as for containment of the glasses to be fused, it must be heated to a higher temperature than that needed to fuse the glasses. Since the melting temperature of a platinum crucible is only 1800°C, great care must be exercised to bring the glasses to their melting points without melting the platinum. As a result of these shortcomings, the fusing of glass tubes and membranes having approximately the same melting point is a very difficult process, and frequently results in a great many defective parts, thus wasting large amounts of expensive material.

An alternative method of constructing an ion-selective electrode with a disk of glass membrane material involves the use of an epoxy tube and an epoxy seal. Epoxy tubes make desirable electrode bodies since they are easily machined, are resilient, and do not react with most filling solutions or test substances. Unfortunately, the hermetic seal required between the epoxy tube and the glass disk is difficult to achieve. Further, glass-epoxy seals often fail when exposed to significant temperature variations.

A need therefore exists for a new method for manufacturing a flat surface ion-sensitive electrode which will improve electrode quality and reduce manufacturing cost.

Summary of the Invention

The invention comprises a flat surface ion-sensitive electrode which is formed from a disk of relatively high-melting-temperature, ion-selective glass hermetically bonded to a tube of relatively low-melting-temperature glass. In the preferred embodiment of the invention, the tube is made from a borosilica glass having a melting point of between 1000°C and 1200°C. The membrane disk, however, is preferably made of a sodium glass having a melting point between 1500°C and 1700°C.

In order to manufacture this ion-sensitive electrode, the disk is rested on an end of the tube and then heated to a temperature below the melting point of the disk but above the melting point of the tube. The heating is accomplished in such a manner as to transfer heat to the tube primarily only through the disk. Thus, heat softens the disk to facilitate bonding; at the same time, it melts the upper surface of the tube immediately adjacent the disk to enable the bonding. In particular, a hot oxygen-propane flame, at about 2000°C, is focused on the disk as it rests on the tube. Initially, the flame is applied to a few places around the circumference of the disk to spot weld the disk to the tube. After the disk is firmly attached to the tube, the tube is rotated so that the disk is softened and the tube is melted evenly about the periphery so as to form a uniform seal therebetween. This technique produces a graded glass junction between the tube and the disk that is a combination of the glasses of the disk and the tube. Further, it produces a clean and reproducable seal with little or no distortion of either glass.

## Brief Description of the Drawings

The foregoing and other objects and advantages of the invention will be apparent from the following more particular description of the preferred embodiment of the invention, as illustrated in the accompanying drawings, in which like reference characters refer to the same parts throughout the different views.

FIG. 1 is a partially cross-sectioned view of a ion-sensitive electrode.

FIG. 2 is an expanded cross section of the operational end of an ion-sensitive electrode showing the manner of attaching the membrane to the tube.

## Description of the Invention

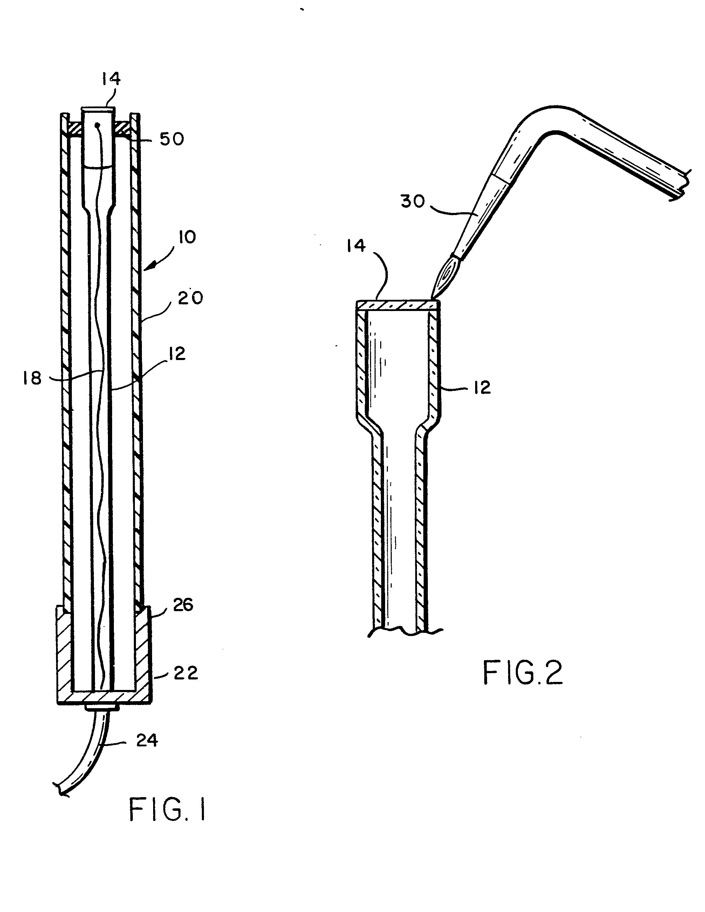

An improved ion-sensitive electrode 10 is shown in FIG. 1. The electrode 10 has a tubular body 12, having one end sealed by a flat membrane disk 14. As is common in ion-sensitive electrodes, an internal electrode element 18 within the tubular body 12 is conductively coupled to the membrane disk 14, typically through an internal filling solution, to provide an electric potential indicative of the ion concentration of a solution. In order to protect the glass electrode body from accidental breakage during use an outer protective tube 20 is placed around it. This outer tube is preferably constructed of resilient plastic and is attached to the membrane end of the electrode body by means of a shock absorbing rubber gasket 50. A connector 22 and lead wires 24 are attached at the remote end 26 of the electrode body to complete the structure.

In FIG. 2, the disk 14 of high-melting-point, ion-selective material rests on the tube 12 which is constructed of substantially lower-melting-point material and is inert to the ions being measured. The disk is bonded to the tube by means of heat from an oxygen-propane torch whose flame temperature is of the order of 2,000°C. The torch may be held stationary and the tube brought to the flame. Initially, the disc is "tacked" to the tube at one or more locations by the application of heat to these locations for a few seconds at each location. Thereafter, the tube can be safely rotated in order to heat the disk 14 evenly, and heat through the disk to the tube 12. The disk is thereby heated to a softening point, below its melting point, so that it does not denitrify. At the same time, because of the tube's lower melting point, the heat supplied through the softened disk is sufficient to melt by contact the edge of the tube. An hermetic seal is thereby formed between the tube and the disk of a "third glass." This "third glass" is a mixture of the tube glass and the slightly softened membrane glass. The electrode body 12, with fused membrane material 14, is then ready for final assembly.

The tube 12 is preferably formed of a relatively low-melting-point (approximately 1050-1150°C) borosilica glass. A typical borosilica glass is Corning 7052, manufactured by the Corning Glass Company, of Corning, New York, having a published melting temperature of 1128°C. Typically, the glass used for the tube has a wall thickness of from 1.0mm to 1.5mm.

Borosilica glass has many advantages over the aluminum silicate glass previosly used for electrodes of this type. Borosilica glass is readily available as an inexpensive commercial product. Further, it is flame workable and is easily controlled by a glass blower. As a result, it has the advantage of sealing well to the internal electrode lead used to complete the electrode body, thus precluding the necessity of an intermediate glass to form the necessary hermetic seal between the glass and the electrode wire. Borosilica glass is also resistant to thermal shocks and therefore is unlikely to crack during electrode fabrication.

The primary reason that borosilica glass had not been previously considered for fabrication of an ion-selective electrode is that, although its coefficient of expansion matches that of sodium membrane glass, its melting point (1128°C) is very much lower. The generalized heating effects common to prior art manufacturing techniques would have caused such a low temperature tube to liquify in the crucible. The method of the present invention solves this problem by restricting the melting of the borosilica glass tube to its points of contact with the membrane glass.

As the result of the inclusion of borosilica glass in the electrode body, the cost of electrode manufacture has been greatly reduced, while electrode quality has been improved. This primarily stems from creation of an improved glass-to-glass seal that is far superior to previous epoxy-to-glass seals, which tended to separate during thermal cycling, or to fragile aluminum silicate glass to membrane glass seals made by previous techniques.

The ion-selective membrane 14 is preferably formed of an approximately 8.0mm diameter flat disk of glass which is preferably about 0.5mm thick. A typical type of membrane glass used in such ion-selective electrodes is Corning 0152, NAS11-18, sodium glass manufactured by Corning Glass Works of Corning, New York. Sodium glass of this type has a melting point of about 1600°C. The technique described above seals the glass tube to the ion-selective membrane disk with little or no distortion of either glass used. Further, since the use of a crucible is eliminated, the possiblity of overheating the membrane glass and changing its characteristics is eliminated.

While the invention has been shown and described with particular reference to the preferred embodiment thereof, it will be understood by those skilled in the art that various changes in form and detail may be made therein without departing from the spirit and scope of the invention as defined by the appended claims. It is possible, for example, to utilize several membrane materials other than sodium glass so long as the membrane glass's melting point is sufficiently above that of the tube disk in order to permit the indirect heating and melting of the tube.

1. A method of manufacturing an ion-sensitive electrode comprising the steps of:

placing a disk of ion-selective membrane glass on a glass tube of substantially lower melting point; and heating said disk to a temperature below its melting point but above the melting point of the tube to transfer sufficient heat through said disk to said tube to melt said tube and thereby enable formation of a seal between said disk and said glass tube.

2. The method of manufacturing an ion-sensitive electrode claimed in claim 1 further comprising the step of tacking the disk to the tube at several locations about its periphery prior to forming a seal between said disk and said tube.

3. The method of manufacturing an ion-sensitive electrode claimed in claim 1 further comprising the step of rotating said glass tube while heating said disk.

4. An ion-sensitive electrode manufactured by the method of claim 1.

5. The ion-sensitive electrode claimed in claim 4, wherein said glass tube comprises borosilica glass.

6. The ion-sensitive electrode claimed in claim 4 wherein said glass tube has a melting point below 1500°C.

7. The ion-sensitive electrode claimed in claim 4, wherein said disk has a melting point of above 1500°C.

8. The method of manufacturing an ion-sensitive electrode claimed in claim 1, wherein said glass tube and said disk are heated by a torch positioned above said disk, so that said tube is heated indirectly through said disk.

9. The method of manufacturing an ion-sensitive electrode claimed in claim 8, wherein said torch has a flame temperature of about 2000°C.

10. A flat surface ion-sensitive electrode comprising a disk of ion-selective membrane glass sealed to a tube of borosilica glass.

11. The flat surface ion-sensitive electrode of claim 10, wherein said disk of ion-selective membrane glass has a melting point above 1500°C.

12. The flat surface ion-selective electrode of claim 10, wherein ion-selective membrane glass is selectively permeable to hydrogen ions.

13. The flat surface ion-selective electrode of claim 10, wherein said disk comprises sodium glass.

14. The flat surface ion-selective electrode of claim 10 wherein the seal between said disk and said glass tube is formed from a fused mixture of the materials which comprise said tube and said disk.

FIG. I

FIG.2